Europäisches Patentamt

European Patent Office

Office européen des brevets

(11) Numéro de publication: **0 064 070**
**B1**

(12) **FASCICULE DE BREVET EUROPEEN**

(45) Date de publication du fascicule du brevet:
**22.08.84**

(21) Numéro de dépôt: **81903016.4**

(22) Date de dépôt: **06.11.81**

(86) Numéro de dépôt international:
**PCT/CH 81/00122**

(87) Numéro de publication internationale:
**WO 82/01497 (13.05.82** Gazette 82/12)

(51) Int. Cl.³: **B 23 P 1/08**

(54) **DISPOSITIF POUR ORIENTER UNE TETE DE GUIDAGE D'UNE MACHINE A DECOUPER PAR ELECTRO-EROSION.**

(30) Priorité: **06.11.80 CH 8237/80**

(43) Date de publication de la demande:
**10.11.82 Bulletin 82/45**

(45) Mention de la délivrance du brevet:
**22.08.84 Bulletin 84/34**

(84) Etats contractants désignés:
**AT DE FR GB LU NL SE**

(56) Documents cités:
**FR - A - 2 366 094**
**US - A - 4 250 371**

(73) Titulaire: **ATELIERS DES CHARMILLES S.A., 109 rue de Lyon, CH-1203 Genève (CH)**

(72) Inventeur: **BONGA; Benno Ibo, Ch. des Vignettes, CH-1299 Crans (CH)**

(74) Mandataire: **Ardin, Pierre et al, PIERRE ARDIN & CIE 22, rue du Mont-Blanc, CH-1211 Genève 1 (CH)**

ACTORUM AG

## Description

On connaît déjà des dispositifs pour orienter une tête d'injection et de guidage d'une électrode-fil dans une machine à découper une électrode-pièce par décharges électriques érosives, cette machine comprenant un support pour des guides de l'électrode-fil, un support pour la pièce à découper, des moyens pour produire un déplacement relatif entre ces supports de manière à obtenir la forme désirée de la découpe, des moyens pour déplacer, sur le support de la tête, un plateau portant la tête de guidage, cela dans des directions transversales à l'axe longitudinal du fil, et des moyens pour orienter au moins une des têtes de guidage, à partir de ces déplacements transversaux, suivant l'axe de la portion de fil comprise dans la zone d'usinage.

Un dispositif de ce genre est décrit notamment dans le brevet français No 2454869.

L'orientation à donner à une tête de guidage dépend bien entendu du décalage latéral existant entre les deux guides sur lesquels passe l'électrode-fil pour traverser la zone d'usinage et de la distance séparant ces deux guides dans le sens de la hauteur. Dans certaines machines, il est prévu de pouvoir modifier cette distance en fonction de l'épaisseur de la pièce à découper, car il est avantageux, pour la précision de l'usinage, que les guides soient aussi proches que possible de la zone d'usinage. Le problème de l'adaptation de l'angle d'orientation d'une tête de guidage en fonction de la distance séparant les deux guides n'a jusqu'ici pas été résolu par une construction purement mécanique.

La présente invention apporte précisément une solution mécanique à ce problème. A cet effet, le dispositif selon l'invention est caractérisé en ce que le plateau supporte deux rotules disposées de part et d'autre d'un plan de symétrie du plateau, parallèle au plan principal de ce plateau et de manière à pivoter dans des logements s'ouvrant respectivement sur chaque face de ce plateau, l'une de ces rotules étant solidaire de l'une des têtes de guidage et l'autre de ces rotules étant solidaire d'un tube pivotant en un point stationnaire ayant une position symétrique de celle de l'autre tête de guidage par rapport au plan de symétrie de ces deux rotules, et en ce qu'il comporte des moyens de liaison mécanique entre ces rotules, ces moyens étant agencés de manière à obtenir des déplacements angulaires symétriques des rotules par rapport audit plan.

Le dessin annexé représente schématiquement et à titre d'exemple une forme d'exécution du dispositif objet de l'invention.

La fig. 1 est une vue explicative.

La fig. 2 est une vue latérale d'une machine à électro-érosion.

La fig. 3 est une vue en coupe à plus grande échelle d'un détail de la machine selon la fig. 2.

La fig. 4 est une coupe selon la ligne IV-IV de la fig. 3.

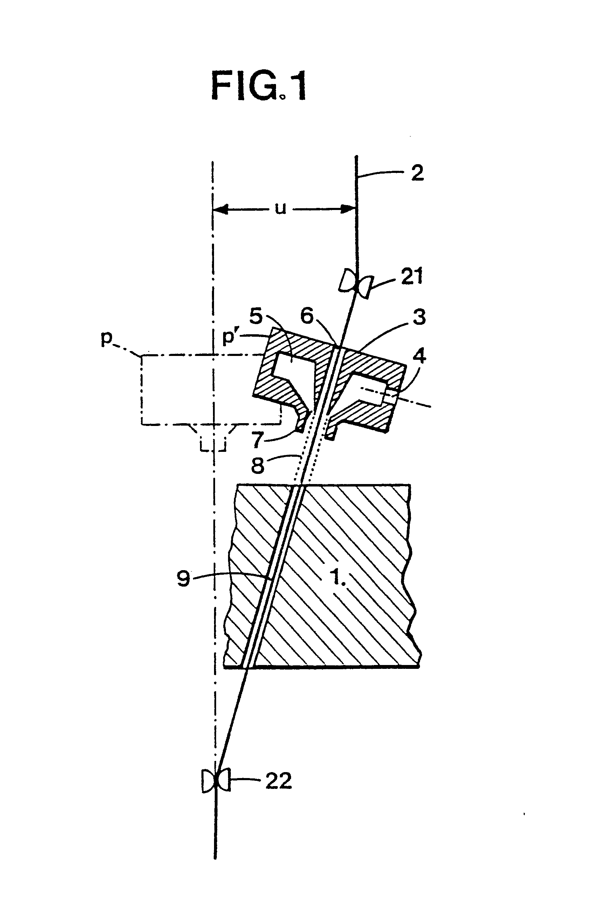

La fig. 1 montre une pièce-électrode 1 à découper au moyen d'une électrode-fil 2 passant sur deux guides 21 et 22 disposés de part et d'autre de la pièce 1. Une buse 3 est disposée de façon à entourer le fil 2. Cette buse présente une entrée 4 pour l'amenée d'un fluide diélectrique, cette entrée aboutissant à une chambre annulaire 5 entourant un passage 6 pour le fil 2. Le fluide amené dans la chambre 5 s'échappe par un passage annulaire 7 pour former un jet 8 entourant le fil et dirigé en direction de la zone d'usinage 9. L'ensemble de la buse 3 et du guide 21 constitue une tête de guidage et d'injection.

Lorsque le guide supérieur est dans la position P, la buse 3 occupe la position représentée en traits interrompus. Lorsque le guide est déplacé d'une distance U pour passer de la position P à la position P', la buse doit présenter une inclinaison correspondant à celle du fil, afin que le jet de fluide d'usinage reste coaxial au fil.

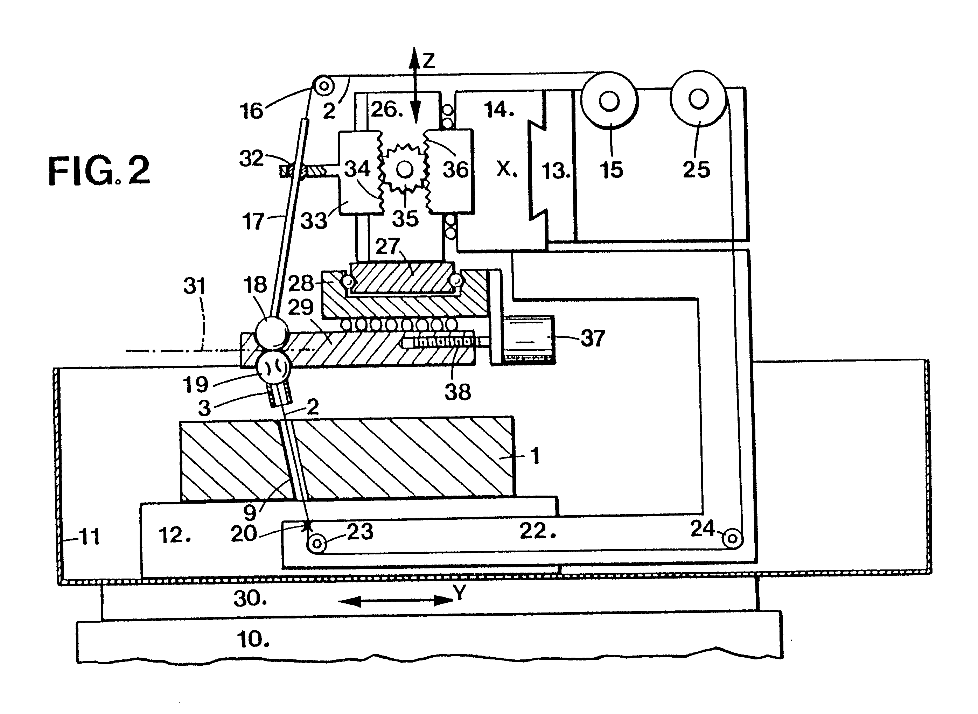

La fig. 2 est une vue latérale avec coupes partielles d'une machine à découper par électro-érosion. Cette machine comprend un bâti 10 portant une cuve 11 dans laquelle la pièce 1 est fixée sur des supports 12. Le bâti 10 porte une traverse 13 formant coulisse pour une pièce 14 portant des éléments de guidage de l'électrode-fil 2.

Le fil constituant l'électrode est fourni par une bobine débitrice 15, passe sur un galet 16, puis pénètre dans un tube de guidage 17 se terminant à sa partie inférieure par une rotule 18. Cette dernière étant prise avec une rotule 19 portant la buse d'injection 3. Le fil passe ensuite dans la zone d'usinage 9 de la pièce 1, puis dans un guide inférieur 20 porté par une pièce 22 en forme d'étrier, cette pièce étant fixée à la pièce coulissante 14. Après le guide 20, le fil 2 passe encore sur des galets de renvoi 23 et 24 pour venir s'enrouler sur une bobine réceptrice 25.

La pièce coulissante 14 porte un support 26 déplaçable verticalement suivant la direction Z. La partie inférieure 27 de ce support est munie d'une table à mouvements croisés comprenant deux plateaux 28 et 29. Cette table à mouvements croisés permet de déplacer la rotule 19 et la tête d'injection 3 par rapport au guide 20 pour donner une inclinaison désirée du fil 2 dans la zone d'usinage 9, cette zone pouvant être ainsi oblique par rapport au plan principal de la pièce 1. La trajectoire de la découpe est déterminée par les déplacements de la pièce coulissante 14 qui peuvent avoir lieu dans la direction X, perpendiculaire au plan du dessin, en combinaison avec des déplacements selon Y d'une pièce 30 comportant la cuve 11 et la pièce 1. Cette disposition est bien connue dans la machine à découper et n'est donc pas décrite ni illustrée plus en détail.

Les moyens permettant de maintenir la buse d'injection 3 orientée selon l'axe 2 dans la zone d'usinage 9 comprennent une liaison mécanique entre les rotules 18 et 19 qui est agencée de manière à obtenir des déplacements angulaires symétriques entre ces rotules par rapport à un plan de symétrie 31 qui est parallèle au plan principal du plateau 29. Les mouvements angulaires de la rotule 19 sont commandés par ceux de la rotule 18 qui est soumise à l'orientation du tube 17. A cet effet, ce tube 17 passe dans un guide 32 qui occupe la position image du guide 20 par rapport au plan de symétrie 31.

Comme le support 26 est déplaçable verticalement pour adapter la distance entre la buse d'injection 3 et le guide 20 à l'épaisseur de la pièce 1, il est nécessaire de déplacer le guide 32 pour que sa distance au plan 33 soit toujours la même que la distance du plan 31 au guide 20. Cela est obtenu au moyen d'un coulisseau 33 muni d'une crémaillère 34 en prise avec une roue dentée 35 pivotant librement sur le support 26, cette roue 35 étant prise avec une crémaillère 36 solidaire de la pièce coulissante 14. De cette façon, tout déplacement vertical du support 26 et donc du plan de symétrie 31 entraîne un déplacement double du guide 32 par rapport au guide 20. Ainsi, le plan de symétrie 31 est toujours placé à mi-distance entre les guides 32 et 20.

Les déplacements de la table à mouvements sont commandés par des moteurs électriques, par exemple du type pas à pas. Le déplacement du plateau 29 par rapport au plateau 28 est commandé par un moteur 37 dont l'arbre porte une tige filetée 38 engagée dans un alésage fileté du plateau 29. Les déplacements du plateau 28 par rapport au support 26 sont commandés par un autre moteur agissant de façon correspondante et qui n'est pas représenté.

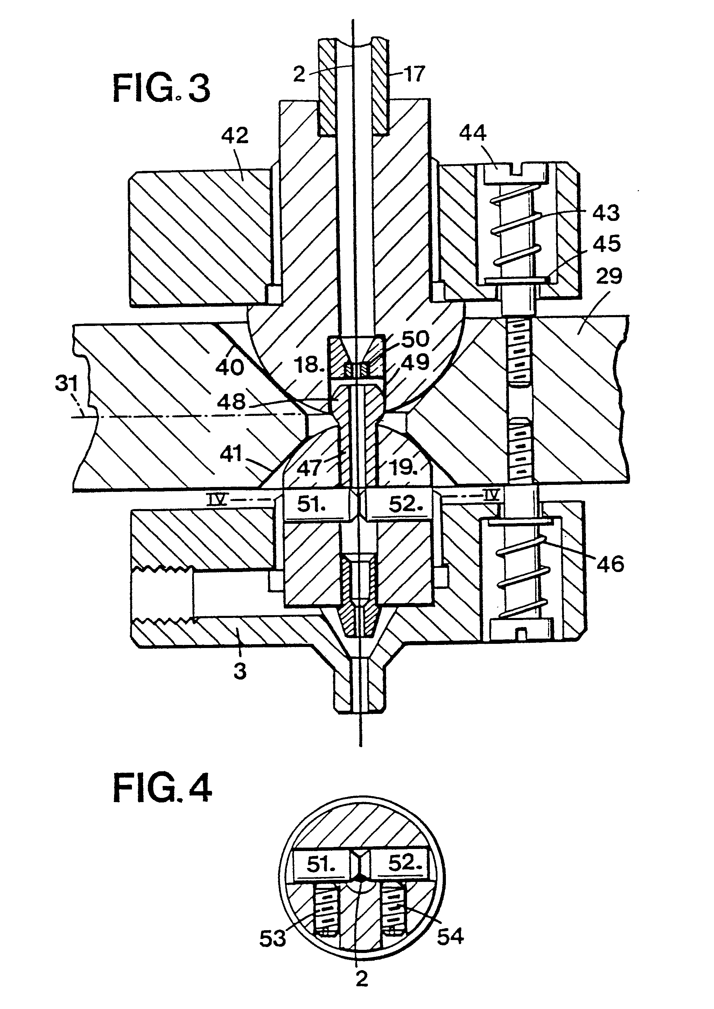

La fig. 3 est une vue à plus grande échelle et en coupe illustrant la liaison mécanique entre les rotules 18 et 19. Ces deux rotules comprennent chacune une portion sphérique qui est logée dans un trou conique 40, respectivement 41. La rotule 18 est solidaire d'une pièce annulaire 42 qui est sollicitée vers le fond du trou 40 par trois ressorts dont un seul 43 est visible au dessin. Ce ressort est logé dans un évidement de la pièce 42 et prend appui, d'une part, contre la tête d'une vis 44 à portée fixée dans le plateau 29 et, d'autre part, contre une rondelle 45 logée dans le fond du trou. Bien entendu, les deux autres ressorts sont disposés à 120° sur la pièce annulaire 42 par rapport au ressort 43.

La rotule inférieure 19 est solidaire de la buse d'injection 3, cette dernière étant également sollicitée en direction du plateau 29 par trois ressorts disposés de la même façon que ceux agissant sur la pièce annulaire 42. Un seul de ces ressorts est visible à la fig. 3 et est désigné par 46. La rotule 19 comprend une partie tubulaire 47 terminée à son extrémité supérieure par un embout en forme de zone sphérique 48, ce dernier étant engagé dans un évidement cylindrique circulaire 49 de la rotule 18. Cette dernière présente un perçage central communiquant avec le tube 17 et formant passage pour l'électrode-fil 2. Lors de son passage de la rotule 18 à la rotule 19, le fil 2 passe dans un palier 50 en rubis synthétique.

La rotule 19 contient encore un guide-fil constitué par deux plots cylindriques 51 et 52 dont les têtes sont chanfreinées pour constituer un guide en forme de V. Ces plots 51 et 52 sont bloqués en position par des vis 53 et 54 (fig. 4).

Grâce à l'accouplement réalisé par la portion 48 en zone de sphère engagée dans l'évidement cylindrique de la rotule 18, les deux rotules 18 et 19 sont accouplées de telle façon que leurs mouvements sont toujours symétriques par rapport au plan de symétrie 31.

Bien entendu, on pourrait remplacer le guide inférieur 20 par une tête de guidage et d'injection du même genre que la buse 3. Dans ce cas, les déplacements de la buse inférieure pourraient être commandés par tout dispositif mécanique ou électrique, de façon à correspondre au déplacement de la buse supérieure, cela de façon que la buse inférieure reste constamment axée sur la portion du fil 2 comprise dans la zone d'usinage 9.

## Revendications

1. Dispositif pour orienter au moins une tête d'injection et de guidage (3) d'une électrode-fil (2) dans une machine à découper une électrode-pièce (1) par décharges électriques érosives, cette machine comprenant un support pour des guides de l'électrode-fil, un support (12) pour la pièce à découper, des moyens pour produire un déplacement relatif entre ces supports de manière à obtenir la forme désirée de la découpe, des moyens pour déplacer, sur le support de la tête, un plateau (29) portant la tête de guidage, cela dans des directions transversales à l'axe longitudinal du fil, et des moyens pour orienter au moins une des têtes de guidage, à partir de ces déplacements transversaux, suivant l'axe de la portion de fil comprise dans la zone d'usinage, caractérisé en ce que le plateau (29) supporte deux rotules (17, 19) disposées de part et d'autre d'un plan de symétrie (31) du plateau (29), parallèle au plan principal de ce plateau et de manière à pivoter dans des logements (40, 41) s'ouvrant respectivement sur chaque face de ce plateau, l'une (19) de ces rotules étant solidaire de l'une (3) des têtes de guidage et l'autre (18) de ces rotules étant solidaire d'un tube (17) pivotant en un point stationnaire (32) ayant une position symétrique de celle de l'autre tête de guidage (20) par rapport au plan de symétrie (31) de ces deux rotules (17, 19), et en ce qu'il comporte des moyens de liaison mécanique entre ces rotules, ces moyens étant agencés de manière à obtenir des déplacements angulaires symétriques des rotules par rapport audit plan.

2. Dispositif selon la revendication 1, comportant des moyens pour déplacer ledit plateau selon l'axe longitudinal du fil, caractérisé en ce qu'il comporte des moyens (32, 34, 35, 36) pour déplacer ledit point de pivotement de la tige dans le même sens que le plateau (29) et sur une distance double du déplacement du plateau.

## Patentansprüche

1. Vorrichtung zum Orientieren zu mindestens eines Injektions- und Führungskopfes (3) eines Elektrodendrahtes (2) in einer Maschine zum fun-

kenerosiven Drahtschneiden eines Elektroden-werkstückes (1), wobei diese Maschine versehen ist mit einer Tragstütze für Führungen des Elektrodendrahtes, mit einer Tragstütze (12) für das zu bearbeitende Werkstück, mit Mitteln um eine relative Verschiebung zwischen diesen Tragstützen in der Weise zu erzeugen, um die gewünschte Schnittform zu erhalten, mit Mitteln um eine den Führungskopf tragende Platte (29) auf der Stützplatte des Kopfes zu verschieben, dies in zur Drahtlängsachse querlaufenden Richtungen, und mit Mitteln, um zumindest einen Führungskopf, von diesen Querverschiebungen ausgehend, nach der Achse des sich in der Bearbeitungszone befindenden Drahtteilstückes zu richten, dadurch gekennzeichnet, dass die Platte (29) zwei Kugelgelenke (17,19) trägt, die beidseits einer der Plattenhauptebene parallelen Symmetrieebene (31) dieser Platte (29) derart angeordnet sind, dass sie in auf jeweils beiden Plattenflächen sich öffnenden Gehäusen (40, 41) drehen, wobei das eine (19) dieser Kugelgelenke mit einem (3) der Führungsköpfe fest verbunden ist und das andere (18) dieser Kugelgelenke mit einem um einen ortsfesten Punkt (32) drehbaren Rohr (17) fest verbunden ist, wobei dieser ortsfeste Punkt eine in bezug auf die Symmetrieebene (31) dieser zwei Kugelgelenke (17, 19) zur Lage des anderen Führungskopfes (20) symmetrische Lage annimmt, und dass sie mechanische Verbindungsmittel zwischen diesen Kugelgelenken aufweist, wobei diese Mittel so angeordnet sind, dass zur benannten Ebene symmetrische Winkelverschiebungen der Kugelgelenke erhalten werden.

2. Vorrichtung nach Anspruch 1, die Mittel aufweist, um die benannte Platte in Richtung der Drahtlängsachse zu verschieben, dadurch gekennzeichnet, dass sie Mittel (32, 34, 35, 36) aufweist, um den benannten Drehpunkt des Rohres in derselben Richtung wie die Platte (29) und um die doppelte Verschiebungslänge der Platte (29) zu verschieben.

Claims

1. A device for orienting at least one injection and guiding head (3) for an electrode-wire (2) in a machine for cutting an electrode workpiece (1) by erosive electric discharges, this machine comprising a support for guides of the electrode-wire, a support (12) for the workpiece, means for producing a relative displacement between these supports such as to provide the desired form of the cut, means for displacing, on the support of the head, a plate (29) supporting the guiding head, this displacement being in directions transverse to the longitudinal axis of the wire, and means for orienting at least one of the guiding heads from these transverse displacements, in the direction of the axis of the wire portion which is included in the machining zone, characterized in that the plate (29) supports two ball joints (17, 19) disposed on both sides of a plan of symmetry (31) of the plate (29) and parallel to the principal plan of this plate in order to swivel in beddings (40, 41) opened respectively on each side of this plate, one (19) of these ball joints being integral with one (3) of the guiding heads and the other (18) of these ball joints being integral with a tube (17) swivelling at a stationary point (32) having a location symmetrical to that of the other guiding head (20) with respect to the plan of symmetry (31) of these two ball joints (17, 19), and in that it comprises means for interconnecting mechanically these ball joints, these means being arranged in such a way to provide symmetrical angular displacements of the ball joints with respect to said plan.

2. A device according to Claim 1, comprising means for displacing said plate in the direction of the longitudinal axis of the wire, characterized in that it comprises means (32, 34, 35, 36) for displacing said swivelling point of the tube in the same direction as the plate (29) and on a distance equivalent to twice the displacement of the plate.

# FIG.1

FIG. 2

# FIG. 3

# FIG. 4